# EUROPEAN PATENT APPLICATION

(11) **EP 1 207 473 A1**
(43) Date of publication of application: **22.05.2002**
(21) Application number: 00310223.3
(22) Date of filing: 17.11.2000
(51) Int. Cl.: G06F 17/60, G06F 17/24

(54) **A tool for creating a questionnaire**

(71) Applicant: Epoch Software Holdings PLC, London NW9 6BX (GB)
(72) Inventor: McLellan, C/o Epoch Software Holdings Plc, Colindeep Lane, London NW9 6BX (GB)
(74) Representative: Hoarton, Lloyd Douglas Charles

(57) **Abstract**

A tool for creating a questionnaire for use in entering information on an electronic form which has at least one editable portion, the tool comprising: means to determine, from the electronic form, at least one parameter of the at least one editable portion; means to record a question associated with the at least one editable portion; and means to define a procedure to be followed by the questionnaire in response to an answer to said question to determine the information to be entered into the at least one editable portion.

## Description

THIS INVENTION relates to a tool for creating a questionnaire, and in particular to a tool for creating an questionnaire to enter information on an electronic form.

Electronic forms have become increasingly common as a means of gathering information by e-mail or over the Internet. An electronic form comprises a computer readable document, some parts of which are pre-written and other parts of which must be completed by a user. In this manner, an electronic form is similar to a conventional paper-based form in that it contains "blanks" in which a user must enter information to complete the form. An electronic form may be sent to one or more recipients electronically, or may be available on a machine-readable substrate, such as a CD. The forms are to be completed by the recipients and may be transmitted back electronically, or may be printed by the recipient after completion to be forwarded in the form of a hard copy. Thus, the gathering of information can be significantly expedited by the use of electronic forms rather than paper-based forms since, if a form is received and transmitted electronically, neither party has to wait for the form to arrive by post and delivery in both directions is substantially instantaneous.

However, there are drawbacks to this mode of gathering information. One such drawback is that many people find the completion of electronic forms difficult, as little guidance is given with regard to the information that should be entered in any one editable portion. This problem arises, in part, because it is not often possible to view the entirety of the electronic document on one's computer screen at any one time, and little information or guidance regarding the required response may be available to the recipient.

It is an object of the present invention to provide a tool for creating a questionnaire to enter information on an electronic form that alleviates the above drawback.

Accordingly, one aspect of the present invention provides a tool for creating a questionnaire for use in entering information on an electronic form which has at least one editable portion, the tool comprising: means to determine, from the electronic form, at least one parameter of the at least one editable portion; means to record a question associated with the at least one editable portion; and means to define a procedure to be followed by the questionnaire in response to an answer to said question to determine the information to be entered into the at least one editable portion.

Advantageously, the at least one parameter of the at least one editable portion is the address of the at least one editable portion.

Preferably, the at least one parameter of the at least one editable portion is a field name of the at least one editable portion.

Conveniently, the tool further comprises means to record a plurality of predetermined possible answers to the at least one question.

Advantageously, the tool further comprises means to specify that the predetermined answers are to be presented to the recipient in a menu.

Preferably, the means to define a procedure comprise means to record at least one validation criterion to be applied to the answer to the at least one question.

Conveniently, the means to define a procedure comprise means to specify that the answer to the at least one question will be rejected if the answer to the at least one question does not meet the at least one recorded validation criterion.

Advantageously, the means to define a procedure comprise means to specify that a rejecting notice will be presented to the recipient if the answer to the at least one question does not meet the at least one recorded validation criterion.

Pre the tool is for use in entering information on an electronic form which has a plurality of editable portions.

Conveniently, the means to define a procedure comprise means to specify that a question associated with a first editable portion of the electronic form will not be posed to the recipient if the recipient gives a certain response to a question associated with a second editable portion of the electronic form.

Advantageously, the means to define a procedure comprise means to specify that certain answers to a question associated with a first editable portion of the electronic form will be rejected if the recipient gives a certain response to a question associated with a second editable portion of the electronic form.

Preferably, the tool further comprises means to specify that information will be entered automatically into a predetermined editable portion.

Conveniently, the information to be entered automatically into the predetermined editable portion is to be derived from the recipient's answers to one or more of the questions.

Advantageously, the information to be entered automatically into the predetermined editable portion is collected from a memory of the recipient's computer.

Preferably, the information to be entered automatically into the predetermined editable portion comprises a time or a date.

Conveniently, the tool further comprising means to specify an order in which the questions associated with the plurality of editable portions are to be presented to the recipient.

Another aspect of the present invention provides a document origination and/or assembly tool incorporating a tool according to the above.

A further aspect of the present invention provides a method of creating a questionnaire for use in entering information on an electronic form which has at least one editable portion, comprising the steps of: determining, from the electronic form, at least one parameter of the at least one editable portion; recording a question associated with the at least one editable portion; and defining a procedure to be followed by the questionnaire in response to an answer to said question to determine the information to be entered into the at least one editable portion.

Advantageously, the step of determining at least one parameter of the at least one editable portion comprises the step of determining the address of the at least one editable portion.

Preferably, the step of determining at least one parameter of the at least one editable portion comprises the step of determining the field name of the at least one editable portion.

Conveniently, the method further comprises the step of defining a plurality of predetermined possible answers to the at least one question.

Advantageously, the method further comprises the step of specifying that the predetermined possible answers are to be presented to the recipient in a menu.

Preferably, the step of defining a procedure comprises the step of recording at least one validation criterion to be applied to the answer to the at least one question.

Conveniently, the step of defining a procedure further comprises the step of specifying that the answer to the at least one question will be rejected if the answer does not meet the at least one recorded validation criterion.

Advantageously, the step of defining a procedure comprises the step of recording rejecting text to be presented to the recipient if the answer to the at least one question does not meet the at least one recorded validation criterion.

Preferably, the method is for use in entering information on an electronic form which has a plurality of editable portions.

Conveniently, the step of defining a procedure comprises the step of specifying that a question associated with a first editable portion of the electronic form will not be posed to the recipient if the recipient gives a certain answer to a question associated with a second editable portion of the electronic form.

Advantageously, the step of defining a procedure comprises the step of specifying that certain answers to a question associated with a first editable portion of the electronic form will be rejected if the recipient gives a certain response to a question associated with a second editable portion of the electronic form.

Preferably, the method further comprises the step of specifying that information will be entered automatically into a predetermined editable portion.

Conveniently, the step of specifying that information will be entered automatically into a predetermined editable portion comprises the step of specifying that the information to be entered automatically into the predetermined editable portion is to be derived from the recipient's answers to one or more of the questions.

Advantageously, the step of specifying that information will be entered automatically into the predetermined editable portion comprises the step of specifying that information collected from a memory of the recipient's computer will be entered automatically into the predetermined editable portion.

Preferably, the step of specifying that information will be entered automatically into the predetermined editable portion comprises the step of specifying that a time or a date will be entered into the predetermined editable portion.

Conveniently, the method further comprises the step of specifying an order in which the questions relating to the plurality of editable portions are to be presented to the recipient.

Another aspect of the present invention provides a computer program comprising computer program code means adapted to: determine, from an electronic form, having at least one editable portion, at least one parameter of the at least one editable portion; record a question associated with the at least one editable portion; and define a procedure to be followed by the questionnaire in response to an answer to said question to determine the information to be entered into the at least one editable portion when said program is run on a computer.

A further aspect of the present invention provides a computer program according to the above embodied on a computer readable medium.

Another aspect of the present invention provides a questionnaire created using the above tool.

A further aspect of the present invention provides a questionnaire created using the above method.

Another aspect of the present invention provides a single file comprising a questionnaire according to the above and the electronic form.

Advantageously, the file is encrypted.

Preferably, the file carries a digital signature.

Conveniently, the file is compressed.

Advantageously, the file incorporates data relating to the recipient's answers.

In order that the present invention may be more readily understood, examples thereof will now be described, by way of example, with reference to the accompanying drawings, in which:
Figure 1 shows an electronic form;
Figure 2 shows a flow chart representing steps taken during use of a questionnaire by a recipient; and
Figure 3 shows a flow chart representing steps taken during use of a tool embodying the present inventions.

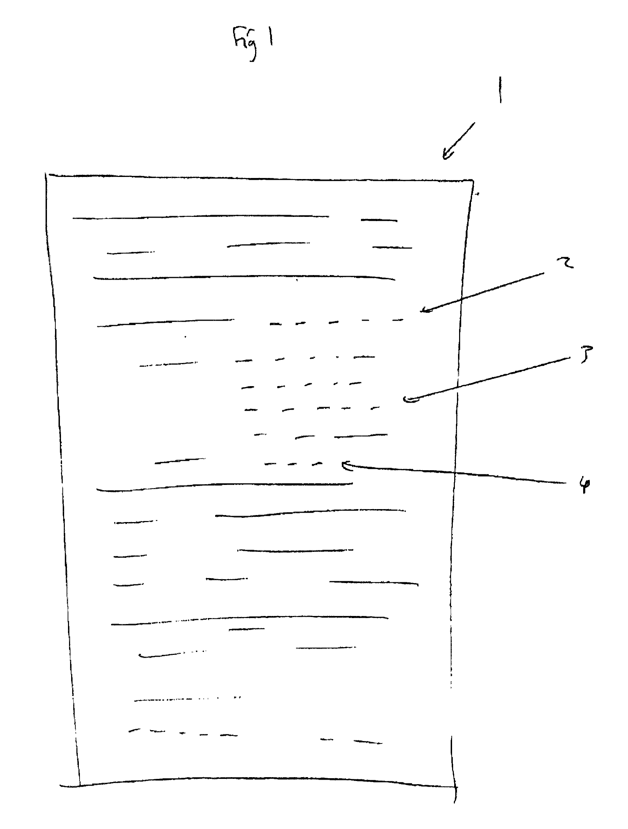

Turning to Figure 1, a representation of an electronic form 1 is shown. The electronic form 1 may be stored in any one of a variety of formats, for example the pdf format. The present invention is not, of course, limited to use with this format. The electronic form 1 may be sent to a recipient via e-mail, downloaded from the Internet, or delivered to the recipient's computer via any other suitable means. The form may be displayed on a monitor or printed.

The electronic form 1 contains several editable portions 2, 3, 4. These editable portions 2, 3, 4 are each of a specific area and shape and are at predetermined locations in the electronic form 1. The rest of the electronic form 1 is fixed text which is at fixed locations within the electronic document 1. When the electronic form 1 is displayed on a monitor, information may be typed or otherwise entered into the editable portions 2, 3, 4 to complete the electronic form 1. Examples of such information may be the name and address of the recipient, and the date on which the electronic form 1 is completed.

As described above, during conventional completion of the electronic form 1, the electronic form 1 is displayed on the recipient's computer screen and information is typed by the recipient into the editable portions 2, 3, 4. It is conventional for each of the editable portions 2, 3, 4 to be associated with a short title or field name, which acts as a prompt and which may initially be displayed within the editable portion 2, 3, 4 to indicate the type of information that must be entered into that particular editable portion 2, 3, 4. For example, one editable portion 2 may contain the prompt "*Name*" and another, larger editable portion 3 may contain the prompt "*Address*", with a further editable portion 4 containing the prompt "*Postcode*".

The "prompt" wording in italics indicates to the user that his or her name is required in the first editable portion 2, and that his or her address is required in the second editable portion 3 and that his or her postcode is required in the third editable portion 4. This prompt wording is usually overwritten by the recipient when the relevant editable portion 2, 3, 4 is completed. Alternatively, the editable portions 2, 3, 4 may be blank, with the field name being stored in association with the editable portion 2, 3, 4 but not actually displayed. The recipient of the form may then deduce the information to be entered in the editable portions from the fixed text of the form which is adjacent to the editable portion.

When the form is completed, it may be printed out and posted or may be transmitted electronically to an appropriate destination.

It has been found that in may instances, recipients of electronic forms 1 make many mistakes in the completion thereof.

Thus, it is proposed to utilise a questionnaire to obtain from the recipient of the electronic form 1 the information necessary to complete the electronic form 1, the questionnaire having the ability to validate at least some of the information given by the recipient against specific criteria, to reduce the possibility of incorrect information being entered into the editable portions 2, 3, 4, of the electronic form 1 by the recipient thereof.

The questionnaire may be downloaded from the Internet, received by e-mail or otherwise transmitted to the recipient of the electronic form 1 together with the electronic form 1, or separately therefrom.

In use, the questionnaire poses questions to the recipient, and provides areas, which may be in the form of highlighted spaces, in which answers to the questions may be typed. Alternatively, a menu, such as a pull-down menu, containing a list of possible answers may be provided, allowing the recipient to select from a list of pre-written potentially valid answers.

The questionnaire need not pose questions to the recipient in the order in which information is required to be entered into the editable portions of the electronic form 1. Rather, information may be gathered by posing the questions relating to the editable portions to the recipient in any order. In this way, the recipient may be prompted to enter information in a more logical or structured way, thereby increasing the ease of use of the questionnaire.

The questionnaire may enter information into the electronic form 1 as each question is answered by the recipient. In this case, all or some of the partially completed electronic form 1 may be displayed during operation of the questionnaire, and answers transferred to the form will be visible to the recipient. Alternatively, the questionnaire may enter information into the electronic form 1 only when answers to all of the questions have been given. If a questionnaire of this type is used, it is not necessary for the electronic form 1 to be transmitted to the recipient at all. The questionnaire may record the answers given by the recipient in a separate file, which may be transmitted to a remote destination (for instance a server) where a copy of the electronic form 1 is stored. The file may then be used to complete the electronic form 1, which may be printed out or otherwise transmitted to a required destination.

The questionnaire may provide a help facility, to further assist the recipient of the questionnaire in providing appropriate answers to the questions posed thereby. For instance, if (as described above) a particular editable portion 4 of the electronic form 1 requires entry of the recipient's postcode, a question may appear on the recipient's computer screen containing text such as "*What is your postcode*", or "*Please type your postcode now*". If the recipient is still, after reading this text, unsure of the required answer, more detailed help may be supplied by the questionnaire.

In one embodiment of operation of the questionnaire, the recipient's computer screen may be divided into three areas, each having a separate scrolling facility where this is required (i.e. where more information than may be displayed at any one time on the screen is potentially displayable in that area of the screen). A first area of the screen is provided for the recipient to type his or her answers into, and contains one or more appropriately sized spaces for receiving typed text. Alternatively, one or more menus may be provided in the first area of the screen which may be utilised in order that the recipient may select an appropriate answer from pre-written answers that are supplied. A second area of the screen shows (where appropriate) some or all of the electronic form 1, which may be in a partially completed state, containing the answers that the recipient has already provided in response to previous questions. A third area of the screen contains help text, as described above.

The questionnaire has the facility to "validate" some or all of the answers given by the recipient. The validation will not ensure that the answers are totally correct, but will at least help in determining if answers given are potentially correct or are certainly incorrect. Such validation is achieved by comparing answers provided by the recipient against pre-set validation criteria. For example, if a question requires a numerical answer, the questionnaire may compare the answer given by the recipient, against an upper limit, a lower limit, or both. For instance, if a percentage is required, the questionnaire will reject any answer that is below zero or above one hundred. Alternatively, the validation criteria may require the answer to be, for example, an integer.

If the answer provided by the recipient does not satisfy the relevant validation criteria, the questionnaire will indicate that the given answer is not appropriate, and will pose the same question to the recipient again. In one embodiment, the questionnaire may provide additional help if an answer provided by the recipient does not match the relevant validation criteria. For instance, in the example given above, the following additional text may appear on the recipient's computer screen: "*The answer you gave was not within the range 0 - 100. Please type an answer within this range*".

The questionnaire may have the capability to edit questions depending on the answers provided by the recipient to previous questions, or to omit certain questions altogether. For example, if the recipient indicates, in response to a question concerning gender, that he is male, a subsequent question regarding the recipient's maiden name will not be presented, as this question is no longer appropriate. The questionnaire may simply leave the editable portion of the electronic form 1 relating to the recipient's maiden name blank, may complete this editable portion with "n/a", or may otherwise appropriately deal with this editable portion.

In addition, the questionnaire may complete certain editable portions of the electronic form 1, where the information required for these editable portions may be collected without the recipient's assistance. Examples of information which may be so collected include the date and/or time of completion of the electronic form 1, which information may be readily available from a memory of the recipient's computer.

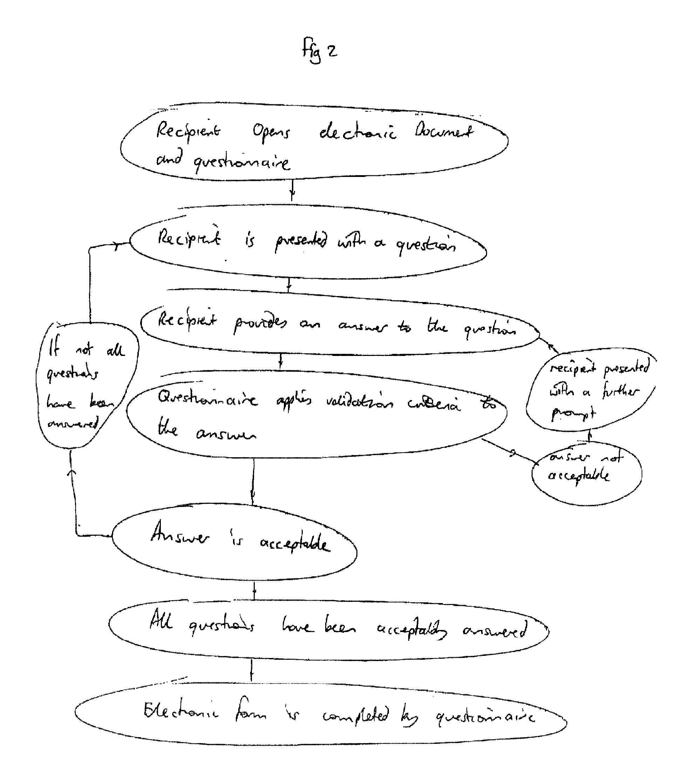

A flow chart representing the steps taken during completion of an electronic form using a questionnaire as described above is shown in Figure 2.

A tool has now been devised for use in generating a questionnaire that may be used with any electronic form 1. Where a number of electronic forms 1 exist or are created, the tool may be used to facilitate the creation of an appropriate questionnaire for each form.

Initially, the tool is used with an electronic form 1 for which a questionnaire is to be created. The tool opens the electronic form 1 and, if the electronic form 1 is provided with provisional "prompt" text in editable portions thereof as described above, this text is read by the tool. Alternatively, the tool reads the undisplayed field name that is associated with each editable portion of the form. The tool determines and reads the address of each editable portion.

The tool then prepares a list of the prompts or field names of the editable portion and displays this list in a first section of the screen.

In a second section of the user's screen, the tool presents an over-writable list of editable portions, and the pre-provided prompt text or field name may be initially presented in the over-writable list. The user may, for each editable portion, enter a question to assist a recipient in providing appropriate information to be entered into the relevant editable portion. Thus, means are provided, for each editable portion, to record a question and to associate this question with the editable portion.

The tool further makes provision for allowing the user to define a procedure to be followed when a response is provided to the questions associated with each of the editable portions. There may be a wide variety of procedures, as will be described below.

As mentioned above, it is not necessary for the questions to be presented to the recipient in an order corresponding to the order of the editable portions in the electronic form 1. In an advantageous embodiment of the present invention, the tool may allow the user to specify the order in which the questions are to be presented to the recipient during use of the questionnaire. Hence, if the user considers that a more logical or user-friendly order of presentation of questions would be more appropriate than that provided by simply following the order of the editable portions, he or she may specify that the questions are to be presented to the recipient in that order.

In the example discussed above of an editable portion requiring a numerical answer, the tool may allow the user to define a procedure in which the answer provided by the recipient is checked to ensure that it is a number, and is then checked against an upper limit, a lower limit, or both. Thus, the defined procedure contains validation criteria, as discussed above.

Alternatively (or as well as such validation), the acceptability of the answer provided by the recipient may depend on the recipient's answers to previous questions. For example, if the recipient is prompted to enter, in a series of editable portions, the apportionment in terms of percentages between different investment funds of a sum of money to be invested, the tool may allow the user to define a procedure whereby the sum of the values entered into these editable portions is compared with one hundred. If the sum of these values exceeds one hundred (i.e. the recipient has attempted to allocate more than 100% of the sum of money available), the questions associated with some or all of these editable portions will be rejected.

The tool may enable the user to prepare a "reject notice", which is to be displayed when an answer is given that is not validated. For example, the reject notice may comprise a message that reads "*You hale allocated more than 100%*". The reject message may be fixed, or may depend on the way in which the recipient's answer is inappropriate.

Alternatively, the reject notice may simply comprise a predetermined symbol to be displayed on the recipient's computer screen, or a predetermined sound to be played by the recipient's computer, upon entry of an answer that is not validated. It will be appreciated that the reject notice may take any of a great variety of formats.

As an alternative to the above-described validation of a group of numerical answers, the tool may allow the user to specify that, once numerical responses have been provided to predetermined questions, a remaining editable portion is completed automatically, using the information provided by the recipient in response to the predetermined questions. In the present example, there may be five editable portions in the electronic document in which the apportionment (in terms of a percentage) of a sum of money between five different investment funds must be entered. The tool may allow the user to specify that, once questions associated with an initial four of these editable portions have been answered by the recipient, the fifth is completed automatically by the questionnaire. In order to derive the correct amount for the fifth editable portion, the questionnaire sums the values provided by the recipient in response to the questions associated with the initial four editable portions, and subtracts this sum from 100%.

In a preferred embodiment, the tool may allow the user to specify that the questionnaire will inform the recipient of the automatic completion of an editable portion. The questionnaire may, for example, present the recipient with a text message reporting the percentage of the sum of money that has been automatically allocated, and the name of the fund to which allocation has occurred.

The tool may further allow the user to specify that the recipient is given an opportunity to disagree with the automatic allocation, and to provide alternative answers to those upon which the automatic allocation was based.

The tool may further allow the user to specify validation criteria relating to the automatic completion of an editable portion. In the present example, the user may specify that, if the sum of the responses to the questions associated with the initial four editable portions exceeds 100%, automatic completion of the fifth editable portion does not take place, and the recipient is informed of this fact and invited to provide alternative answers to some or all of the questions associated with the initial four editable portions.

As described below, the tool may further allow the user to specify help topics to be presented to the recipient if a wrong answer is provided, and the tool may allow the user to specify that the recipient is encouraged to view one or more of the help topics in the event of an invalid answer being provided.

A further example of a procedure that may be defined in relation to an editable portion relates to a case where the recipient is required to enter a date. The tool may allow the user to specify that no dates more than one hundred and twenty years before the present date are acceptable. Such a validation criterion may be appropriate where the recipient is required to enter his or her date of birth.

The tool may further enable the user to enter a list of pre-determined valid answers, from which the recipient may select. The tool may allow the user to define how these pre-determined answers are to be presented to the recipient, and examples of such presentation include menus such as scrolling or pull-down menus.

The procedure defined by the user in relation to an editable portion may have consequences for other editable portions of the electronic document 1. As mentioned above, a question regarding the recipient's maiden name will not be appropriate if the recipient indicates that he is male. In this case, the procedure defined in relation to the editable portion relating to the recipient's gender may be linked to the editable portion relating to the recipient's maiden name. The procedure may be defined as instructions to leave the editable portion relating to the recipient's maiden name blank, to complete this editable portion with n/a, or to otherwise appropriately deal with this editable portion.

Additionally, the tool may allow the user to specify that one or more predetermined editable portions of the electronic form will be completed without assistance from the recipient, using information available from the recipient's computer or from a surrounding network. As described above, such information may include the time and/or date of completion of the electronic form by the recipient. In a preferred embodiment, the user may specify a number of "core" editable portions, and specify that the time and/or date will be entered automatically into the relevant editable portions as soon as all of the core editable portions have been completed, or as soon as all of the information necessary to complete the core editable portions has been gathered from the recipient. The tool may allow the user to specify from where (in terms of the memory structure of the recipient's computer) the questionnaire is to collect the information that is to be automatically entered on the electronic form 1.

The tool may further allow the user to prepare a help screen, by defining help topics and entering text to be displayed to the recipient if the recipient selects any of these help topics. The tool may further allow the user to define the way in which such text is to be presented to the recipient.

Advantageously, the tool is provided with help to assist the user in creation of a questionnaire. In a similar manner to that described above in relation to the questionnaire itself, the tool may define a third area of the user's computer screen in which helpful comments are presented to the user, and these comments will depend on the activity in which the user is engaged. For example, if the user is defining a procedure to be followed in response to a numerical answer, text advising the user in how to define such procedures may be presented in the third area of the user's screen.

In use of the tool, the user opens the electronic document 1 using the tool. On being presented with a list of the associated with the editable portions in the electronic tool 1, the user may work through these prompts or field names in any order, defining questions to be presented to the recipient and procedures to be followed in response to the answers to such questions, as described above.

When the user has finished defining questions and procedures in this manner, the user may designate that the questionnaire is to be completed. The tool then compiles the questions and/or procedures to form a questionnaire, which is preferably storable and transmissible as a discrete file.

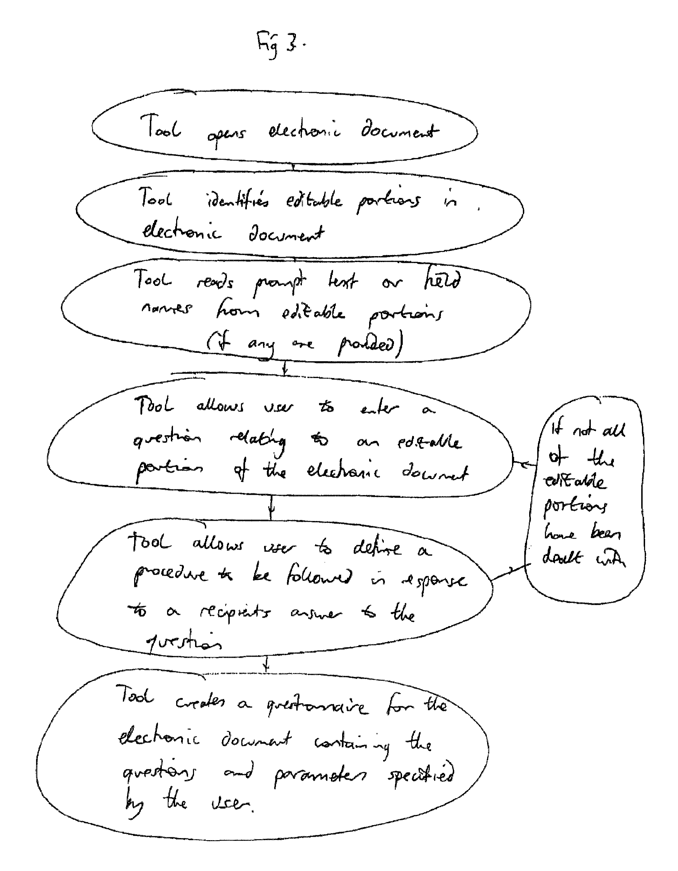

A flow chart representing the steps taken during creation of a questionnaire using a tool embodying the present invention is shown in Figure 3.

In a preferred embodiment of the present invention, the tool is provided in combination with a further tool offering document origination and/or assembly features.

As described above, the questionnaire may be transmitted to a recipient thereof together with, or separately from, the electronic form 1 to which the questionnaire relates.

In a preferred embodiment of the present invention the questionnaire, along with the electronic form 1 to which the questionnaire relates, may be presented as a single composite questionnaire/form file. It should be noted, therefore, that the single composite file includes data relating to: the questions; the defined procedures to be followed by the questionnaire in response to the answers; possible answers, where these have been defined by the tool; and the electronic form 1 itself. This mode of storage and presentation is particularly convenient for the recipient, who need not need worry about receiving the electronic form 1 and the questionnaire separately and having to place them in the same location in order to use the questionnaire.

In addition, the composite file may be encrypted, with the necessary key to decrypt the file being provided only to intended recipients of the composite file. Such encryption may be appropriate where the contents of the electronic form 1 or the questions to be provided to the recipient are confidential. The user may also specify that the questionnaire will, on completion of the electronic form 1, create an encrypted response file comprising a further composite file containing the completed electronic form 1 or simply a file containing solely the answers to the questions, for transmission back to the user or to a relevant third party.

In this manner, neither the user nor the recipient need worry about the transmission of sensitive data in the composite file or the response file through public channels (in particular, over the Internet).

The response file itself may incorporate, as a single file, not only the recipient's responses but also the content of the composite questionnaire/form file.

Further, the tool may allow the user to specify that a digital signature may be added to the composite file by the user, or to the answer file by the recipient. In this embodiment, the recipient can be certain that the questionnaire and the electronic form 1 have not been tampered with since transmission thereof by the user, in the case of the addition of a digital signature to the composite file by the user. Additionally, the user (or other third party to whom the response file is transmitted) can be sure that the recipient's responses to the questions have not been altered since transmission of the response file by the recipient, in the case of the addition of a digital signature to the response file by the recipient.

In addition, the composite file may be compressed, to allow greater ease of transmission thereof, and to minimise the amount of memory occupied by the questionnaire and the electronic form 1 prior to use of the questionnaire to complete the electronic form 1. It will be appreciated that any conventional mode of compression may be employed in this instance.

It will be appreciated that, using a questionnaire as described above, the likelihood of the recipient entering incorrect or inappropriate information on the electronic form 1 is substantially reduced, and the use and completion of the electronic form 1 by the recipient is significantly enhanced. Indeed, it is envisaged that completion of electronic forms 1 will be rendered a far less onerous task when the recipient employs a questionnaire created by the tool, and also the form will, in all probability, be completed more accurately. The recipient is given guidance at each step of completion of the form, and may be given additional guidance if he or she has misunderstood the initial question and entered inappropriate information.

The present invention provides a simple, efficient and flexible way of creating a questionnaire to aid greatly in the completion of a wide variety of electronic forms 1. One advantageous result of this is that time wasted by recipients incorrectly completing forms and by users having to re-send forms back to such recipients can be significantly reduced.

In the present specification "comprises" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A tool for creating a questionnaire for use in entering information on an electronic form which has at least one editable portion, the tool comprising:
means to determine, from the electronic form, at least one parameter of the at least one editable portion;
means to record a question associated with the at least one editable portion; and
means to define a procedure to be followed by the questionnaire in response to an answer to said question to determine the information to be entered into the at least one editable portion.

2. A tool according to Claim 1, wherein the at least one parameter of the at least one editable portion is the address of the at least one editable portion.

3. A tool according to Claim 1, wherein the at least one parameter of the at least one editable portion is a field name of the at least one editable portion.

4. A tool according to any preceding claim, further comprising means to record a plurality of predetermined possible answers to the at least one question.

5. A tool according to Claim 4, further comprising means to specify that the predetermined answers are to be presented to the recipient in a menu.

6. A tool according to any preceding claim, wherein the means to define a procedure comprise means to record at least one validation criterion to be applied to the answer to the at least one question.

7. A tool according to Claim 6, wherein the means to define a procedure comprise means to specify that the answer to the at least one question will be rejected if the answer to the at least one question does not meet the at least one recorded validation criterion.

8. A tool according to Claim 6 or 7, wherein the means to define a procedure comprise means to specify that a rejecting notice will be presented to the recipient if the answer to the at least one question does not meet the at least one recorded validation criterion.

9. A tool according to any preceding claim, for use in entering information on an electronic form which has a plurality of editable portions.

10. A tool according to Claim 9, wherein the means to define a procedure comprise means to specify that a question associated with a first editable portion of the electronic form will not be posed to the recipient if the recipient gives a certain response to a question associated with a second editable portion of the electronic form.

11. A tool according to Claim 9, wherein the means to define a procedure comprise means to specify that certain answers to a question associated with a first editable portion of the electronic form will be rejected if the recipient gives a certain response to a question associated with a second editable portion of the electronic form.

12. A tool according to any one of Claims 9 to 11, further comprising means to specify that information will be entered automatically into a predetermined editable portion.

13. A tool according to Claim 12, wherein the information to be entered automatically into the predetermined editable portion is to be derived from the recipient's answers to one or more of the questions.

14. A tool according to Claim 12, wherein the information to be entered automatically into the predetermined editable portion is collected from a memory of the recipient's computer.

15. A tool according to Claim 14, wherein the information to be entered automatically into the predetermined editable portion comprises a time or a date.

16. A tool according to any one of Claims 9 to 14, further comprising means to specify an order in which the questions associated with the plurality of editable portions are to be presented to the recipient.

17. A document origination and/or assembly tool incorporating the tool of any preceding claim.

18. A method of creating a questionnaire for use in entering information on an electronic form which has at least one editable portion, comprising the steps of:
determining, from the electronic form, at least one parameter of the at least one editable portion;
recording a question associated with the at least one editable portion; and
defining a procedure to be followed by the questionnaire in response to an answer to said question to determine the information to be entered into the at least one editable portion.

19. A method according to Claim 18, wherein the step of determining at least one parameter of the at least one editable portion comprises the step of determining the address of the at least one editable portion.

20. A method according to Claim 18, wherein the step of determining at least one parameter of the at least one editable portion comprises the step of determining the field name of the at least one editable portion.

21. A method according to any one of Claims 18 to 20, further comprising the step of defining a plurality of predetermined possible answers to the at least one question.

22. A method according to Claim 21, further comprising the step of specifying that the predetermined possible answers are to be presented to the recipient in a menu.

23. A method according to any one of Claims 18 to 22, wherein the step of defining a procedure comprises the step of recording at least one validation criterion to be applied to the answer to the at least one question.

24. A method according to Claim 23, wherein the step of defining a procedure further comprises the step of specifying that the answer to the at least one question will be rejected if the answer does not meet the at least one recorded validation criterion.

25. A method according to Claim 23 or 24, wherein the step of defining a procedure comprises the step of recording rejecting text to be presented to the recipient if the answer to the at least one question does not meet the at least one recorded validation criterion.

26. A method according to any one of Claims 18 to 25, for use in entering information on an electronic form which has a plurality of editable portions.

27. A method according to Claim 26, wherein the step of defining a procedure comprises the step of specifying that a question associated with a first editable portion of the electronic form will not be posed to the recipient if the recipient gives a certain answer to a question associated with a second editable portion of the electronic form.

28. A method according to Claim 26, wherein the step of defining a procedure comprises the step of specifying that certain answers to a question associated with a first editable portion of the electronic form will be rejected if the recipient gives a certain response to a question associated with a second editable portion of the electronic form.

29. A method according to any one of Claims 26 to 28, further comprising the step of specifying that information will be entered automatically into a predetermined editable portion.

30. A method according to Claim 29, wherein the step of specifying that information will be entered automatically into a predetermined editable portion comprises the step of specifying that the information to be entered automatically into the predetermined editable portion is to be derived from the recipient's answers to one or more of the questions.

31. A method according to Claim 29, wherein the step of specifying that information will be entered automatically into the predetermined editable portion comprises the step of specifying that information collected from a memory of the recipient's computer will be entered automatically into the predetermined editable portion.

32. A method according to Claim 31, wherein the step of specifying that information will be entered automatically into the predetermined editable portion comprises the step of specifying that a time or a date will be entered into the predetermined editable portion.

33. A method according to any one of Claims 26 to 32, further comprising the step of specifying an order in which the questions relating to the plurality of editable portions are to be presented to the recipient.

34. A computer program comprising computer program code means adapted to:
determine, from an electronic form, having at least one editable portion, at least one parameter of the at least one editable portion;
record a question associated with the at least one editable portion; and
define a procedure to be followed by the questionnaire in response to an answer to said question to determine the information to be entered into the at least one editable portion when said program is run on a computer.

35. A computer program as claimed in Claim 34 embodied on a computer readable medium.

36. A questionnaire created using the tool of any one of Claims 1 to 17.

37. A questionnaire created using the method of any one of Claims 18 to 33.

38. A single file comprising a questionnaire according to Claim 36 or 37 and the electronic form.

39. A file according to Claim 38, wherein the file is encrypted.

40. A file according to Claim 38 or 39, wherein the file carries a digital signature.

41. A file according to any one of Claims 38 to 40, wherein the file is compressed.

42. A file according to any one of Claims 38 to 41, wherein the file incorporates data relating to the recipient's answers.

43. A tool substantially as hereinbefore described, with reference to the accompanying drawings.

44. A method substantially as hereinbefore described, with reference to the accompanying drawings.

45. A computer program substantially as hereinbefore described, with reference to the accompanying drawings.

46. Any novel feature or combination of features disclosed herein.
